# EUROPEAN PATENT SPECIFICATION

(11) **EP 2 108 597 B1**
(45) Date of publication and mention of the grant of the patent: **22.09.2010**
(21) Application number: 09251044.5
(22) Date of filing: 03.04.2009
(51) Int. Cl.: B65D 65/46, B32B 27/08, B32B 7/02, B29C 47/00, B29C 47/06

(54) **Packaging and method of manufacture thereof**
Verpackung und Herstellungsverfahren dafür
Conditionnement et son procédé de fabrication

(30) Priority: 07.04.2008 GB 0806271
(43) Date of publication of application: 14.10.2009
(73) Proprietor: Chemlink Specialities Ltd., Manchester M31 4ZU (GB)
(72) Inventor: Whitchurch, Graham, Garthorpe, N. Lincs DN17 4RX (GB)
(74) Representative: Tomkinson, Alexandra

(56) References cited:
- EP-A- 0 513 692
- EP-A- 0 514 172
- EP-A- 1 486 532
- WO-A-94/29188
- DE-A1- 19 632 799
- US-A- 2 541 478
- US-A- 5 108 807

## Description

This invention relates to packaging, a method of manufacturing said packaging and a method of disposing of said packaging.

It is a known problem that landfill sites, for the containment of rubbish, household waste and/or industrial waste, are filling up at an alarmingly rapid rate. In addition, there are many pollution problems associated with landfill sites, and large scale waste disposal is both time consuming and expensive. As such, there is a drive to reduce the level of packaging produced by retail outlets, to increase the levels of recycling and to use alternative materials that will biodegrade over time in order to reduce the levels of waste generated. This drive has so far come in the form of introducing fines to companies who produce too much waste and packaging, charging households based on the amount of waste they produce, introducing recycling collections and/or the like. However, these initiatives are not happening quickly enough to prevent or significantly reduce the environmental impact the large amount of waste being produced is having. In addition, biodegradable packaging typically takes a number of months or years to completely biodegrade, thereby still requiring a storage facility with suitable conditions during this period to allow biodegradation to take place. Thus, current biodegradable packaging and material still requires significant time and expense to dispose of the same.

A further problem is that many biodegradable materials, such as board or cardboard, do not provide sufficient rigidity and/or strength for many applications compared to non-biodegradable materials, such as plastics. As such, many conventional environmentally friendly materials are not suitable for applications where strength and rigidity in the container or packaging is required.

EP513692 and EP514172 both disclose a water soluble film for packaging caustic chemicals comprising an outer layer and an intermediate layer of water soluble polymeric material that can be polyvinyl alcohol, and an inner layer of material that does not comprise polyvinyl alcohol and is resistant to caustic material.

It is therefore an aim of the present invention to provide packaging which overcomes the abovementioned problems.

It is a further aim of the present invention to provide a method of manufacturing packaging which overcomes the abovementioned problems.

It is a yet further aim of the present invention to provide a method of disposal of packaging which overcomes the abovementioned problems.

According to a first aspect of the present invention there is provided packaging, said packaging having one or more walls formed from a material comprising two or more layers which have been co-extruded or co-moulded together during manufacture, **characterised in that** all layers of the material include polyvinyl alcohol and the polyvinyl alcohol used in at least two of the material layers differs in type, form, thickness and/or any or any combination of chemical characteristics, mechanical characteristics, structural characteristics, rigidity, impact strength, tensile strength, tear strength or modulus, particle size, chemical grade or solubility.

By providing at least two of the layers of the co-moulded or co-extruded packaging with different characteristics, of a different form, type, different thickness and/or the like, the properties of the packaging wall can be changed compared to packaging formed from a single type of polyvinyl alcohol having the same form, type, thickness and/or characteristics. For example, the packaging of the present invention can have different levels of rigidity, impact strength, tensile strength, tear strength or modulus, solubility and/or the like. The one or more characteristics can be chemical characteristics, mechanical characteristics, structural characteristics and/or the like.

Preferably at least two of the layers are formed from a different grade (i.e. chemical grade) of polyvinyl alcohol. For example, up to five different grades of polyvinyl alcohol could be used, each grade having different properties, such as chemical properties, mechanical properties, structural properties and/or the like. In one example the arrangement of polyvinyl layers is selected from the group including AB, ABA, AAB, ABC, ABCD, ABBA, ABCA, AABC, AABB, ABBB, ABCDE, ABCBA, AABAA, ABBBA, ABAAA, ABBAA, ABBBB, ABBBC etc, where A, B, C, D and E are different grades of polyvinyl alcohol. It is to be noted that the above list is non-exhaustive.

In one embodiment the packaging material comprises three or more layers of polyvinyl alcohol. Each of the three or more layers can be formed from polyvinyl alcohols having a different form, thickness, type and/or one or more characteristics. Alternatively, two or more layers of the at least three layer material can be formed from polyvinyl alcohol being substantially the same or having substantially the same form, type, thickness and/or one or more characteristics.

Preferably the two or more layers of the at least three layer material having substantially the same form, type, thickness and/or one or more characteristics are not provided in adjacent layers (i.e. they are provided a spaced distance apart with at least one intermediate layer having a different form, thickness, type and/or one or more characteristics therebetween). Alternatively, they can be provided in the adjacent layers.

In a preferred embodiment the packaging comprises at least three layers of polyvinyl alcohol, the two outermost layers (i.e. the external and internal layers) are substantially the same and the one or more intermediate layers located between the two outermost or external/internal layers differs in type, form, thickness and/or one or more characteristics compared to the two outermost layers.

Each layer of the packaging material can be produced by a different extruder or plasticising unit. Alternatively, multiple layers of the packaging can be produced by a single extruder or plasticising unit with a split flow.

In one embodiment one or more additional material components can be included in one or more of the layers with the polyvinyl alcohol if required in the multi-layered packaging structure. The one or more additional material components can include one or more biopolymers. The biopolymers can provide the packaging with one or more specific properties, such as water proofing, sealing, cost reduction and/or the like.

The one or more biopolymers could include any or any combination of poly lactic acid (PLA), co-polyester, starch, polyhydroxyalkonoate (PHA), polyhydroxybutyrate (PHB), blends thereof and/or the like.

In one or more functional additives can be included in one or more of the layers with the polyvinyl alcohol if required and/or can be included in or form separate layers in the multi-layered packaging structure. The functional additives can perform a particular function once released on solubilisation of one or more of the polyvinyl alcohol layers. For example, the additives can include one or more enzymes, microbes, cleaning agents, biocides, detergent builders and/or the like which can perform a function in the locality of release of the same from the packaging.

In a preferred embodiment the polyvinyl alcohols in the two or more layers have different levels of solubility in aqueous solution, such as for example in water, at a particular temperature or temperature range and/or for a particular time or time period. For example, a layer of the material could dissolve relatively quickly in aqueous solution (i.e. less than a minute or between 0-60 minutes). Alternatively, a layer of the material could dissolve relatively slowly in aqueous solution (i.e. greater than 60 minutes).

Preferably at least one of the layers is substantially soluble in aqueous solution at relatively low or cold temperatures, such as for example at a temperature range between 5-25°C, and further preferably at a temperature range of between 5-10°C. Preferably at least one of the layers is substantially soluble in aqueous solution at warm temperatures, such as for example at a temperature range between 25.1 -60°C, and further preferably at a temperature range of between 30-50°C. Preferably at least one of the layers is substantially soluble in aqueous solution at relatively high or hot temperatures, such as for example at a temperature range of between 60.1°C-90°C, and further preferably at a temperature range of between 65-80°C.

In one embodiment one or more outer layers of the packaging material are formed from hot temperature soluble polyvinyl alcohol, thereby reducing the likelihood of solubilising of the outermost layer of the material when in contact with an aqueous solution or moisture through normal handling by a user, such as at room temperature. Preferably one or more inner layers of the packaging material are formed from cold temperature soluble polyvinyl alcohol, thereby allowing rapid solubilisation of the material at normal room temperature when contacted with an aqueous solution once the outer hot soluble layers of the material have been solubilised. In addition, the arrangement of hot temperature and cold temperature layers allows the packaging to be used to contain aqueous soluble or aqueous containing materials therein at room temperature without deterioration of the packaging over time.

In a preferred embodiment one or more outer, outermost or external layers of the packaging are formed are soluble at a warmer temperature compared to one or more inner, innermost, intermediate and/or internal layers of the packaging.

Preferably the outer, outermost or external layer or layers of the packaging material formed from the hot temperature soluble polyvinyl alcohol are relatively thin compared to an inner or intermediate layer of the packaging material. As such, the inner or intermediate cold temperature soluble layer can provide a significant part of the strength and/or rigidity to the packaging whilst being protected from moisture by a thin outer hot or warm water soluble layer.

Preferably a relatively thin layer (such as for example an outer, outermost or external layer) is between 5-250 microns and further preferably between 5-10 microns.

Preferably a relatively thick layer (such as for example an inner, innermost or intermediate layer) is between 10-2000 microns and further preferably between 50-1000 microns.

Preferably the packaging is provided in the form of a container, such as a substantially flexible or rigid container. The container can be provided in any suitable size, shape, form and/or design.

In one embodiment a substantially rigid container is in the form of a bottle, tray, tube or any suitably shaped container with or without a lid; for example as outer packaging for a dishwashing or washing machine tablet, sachet and/or the like.

The substantially flexible container can be in the form of a tube, bag, film and/or the like.

The packaging can be used for any suitable application, such as in the medical industry, food industry (i.e. with a food approved layer in contact with the food), chemical industry, agricultural industry, horticultural industry, detergents industry, personal care products industry, cosmetics industry, pharmaceutical industry, parcel packaging industry, household product industry and/or the like.

Preferably the packaging is used to provide outer secondary packaging for one or more items, compositions, objects formed of or containing primary or inner packaging and/or the like. For example, an object or composition can be substantially or partially contained within primary packaging and the primary packaging can then be contained in the secondary packaging according to the present invention. The primary packaging can include aqueous soluble packaging if required. The primary packaging is typically separate to and independent of the secondary or outer packaging. Thus, the secondary packaging can be used to transport and/or store the primary or inner packaging therein.

In one embodiment the container is provided with closure means for closing an opening defined in said container and preferably the closure means are in the form of a lid. The lid can be formed from the same or different material to the material of the container body.

The one or more characteristics of the polyvinyl alcohol which differ between the two or more layers can include any or any combination of solubility, grade, particle size, and/or the like.

The phrase "the polyvinyl alcohol used in at least two of said layers is different in form" used herein could relate to the colour, clarity, one or more physical properties, physical parameters, chemical constituents and/or the like.

According to a second aspect of the present invention there is provided a method of manufacturing packaging, said method including the step of co-extruding or co-moulding two or more layers of material to form one or more walls of the packaging, **characterised in that** all layers of the material include polyvinyl alcohol and the polyvinyl alcohol used in at least two of the material layers differs in type, form, thickness and/or any or any combination of chemical characteristics, mechanical characteristics, structural characteristics, rigidity, impact strength, tensile strength, tear strength or modulus, particle size, chemical grade or solubility.

Preferably the polyvinyl alcohol used to form the packaging is provided in pellets and/or granules of a thermoplastically processable polymer.

The two or more layers of the polyvinyl alcohol material can be co-extruded together to produce blown film, cast film, one or more sheets, tubes and/or the like.

The two or more layers of the polyvinyl alcohol material can be co-moulded together to form containers and/or packaging by injection moulding, blow moulding, injection stretch blow moulding, compression moulding and/or the like.

According to a further aspect of the present invention there is provided a package, said package being substantially rigid in form having one or more walls formed from a material comprising two or more layers of polyvinyl alcohol which have been co-extruded or co-moulded together during manufacture, and wherein the polyvinyl alcohol used in at least two of said layers is different in form, type, thickness and/or one or more characteristics.

According to a yet further aspect of the present invention there is provided packaging, said packaging having one or more walls formed from a material comprising two or more layers of polyvinyl alcohol which have been co-extruded or co-moulded together during manufacture, and wherein the polyvinyl alcohol used in at least two of said layers has different levels of solubility at a pre-determined temperature or temperature range.

According to a yet further aspect of the present invention there is provided a method of disposing of packaging, said packaging having one or more walls formed from a material comprising two or more layers of polyvinyl alcohol which have been co-extruded or co-moulded together during manufacture, said method including the step of substantially solubilising the packaging in aqueous solution at a pre-determined temperature or temperature range.

The above method of disposal can take place on single layer polyvinyl alcohol packaging but is particularly effective on disposal of packaging formed from polyvinyl alcohol having at least layers polyvinyl alcohol which have been co-extruded or co-moulded together during manufacture.

Preferably the packaging is disposed of by substantially solubilising the packaging in aqueous solution at a pre-determined temperature or temperature ranges.

Preferably a catalyst or additive is provided for increasing the speed at which solubilisation takes place. The catalyst or additive can include any suitable material which assists with breaking down the polyvinyl alcohol at a pre-determined temperature or temperature range. The catalyst may include one or more particulate solids which when added to the PVOH will accelerate the rate of dissolution of the same by generating effervescence by the release of carbon dioxide gas. These solids can include bicarbonate and/or carbonate salts of alkali or alkali earth metals, such as for example, potassium, magnesium, sodium and/or calcium. The solid particle size is preferably in the range of 1-25microns. Other materials that could be added to accelerate the dissolution rate include any compatible acidic substance, such as for example, tartaric acid, citric acid, maleic acid, cinnamic acid and/or the like.

Preferably the required temperature of the aqueous solution is achieved in conventional electrical dishwashing apparatus or washing machine apparatus. The packaging can be located in the dishwasher or washing machine and a washing cycle can be set which provides one or more pre-determined temperature ranges during the wash cycle to provide suitable solubilisation conditions for the packaging. However, the solubilisation process could take place by immersing the packaging in an aqueous solution (not necessarily a dish washer or washing machine) at a pre-determined temperature for a pre-determined period of time.

The packaging can also be disposed of by composting the same in an industrial or home composting system.

Alternatively still, the packaging could be disposed of using via incineration.

In one embodiment if an outer layer of the packaging is formed from hot or warm soluble polyvinyl alcohol, a warm or hot water wash cycle (such as for example a dish washer) is preferably used on the packaging first for the disposal process prior to any lower temperature wash cycle. However, a cold water cycle could be used on the packaging to first rinse any debris or contaminants of the packaging prior to the solubilisation process taking place.

In one embodiment if an outer layer of the packaging is formed from a cold soluble polyvinyl alcohol, a cold water wash cycle is preferably used on the packaging first for the disposal process.

The waste products generated from solubilisation of the packaging are moved into solution and can be drained away with the normal waste water from the wash process for degradation by normal sewage and waste water treatment processes. The biomass generated by solubilisation of the soluble packaging is readily biodegraded by aerobic and anaerobic digestion to form carbon dioxide and water.

Preferably any printed matter and/or labelling provided on the packaging is substantially soluble in aqueous solution.

Detailed embodiments of the present invention will now be described with reference to the accompanying figures, wherein:
Figure 1 is an example of a substantially rigid container according to an embodiment of the present invention;
Figure 2 is.a cross sectional view of a wall of the rigid container shown in figure 1; and
Figure 3 is a cross sectional view of a wall of a container according to a further embodiment of the present invention.

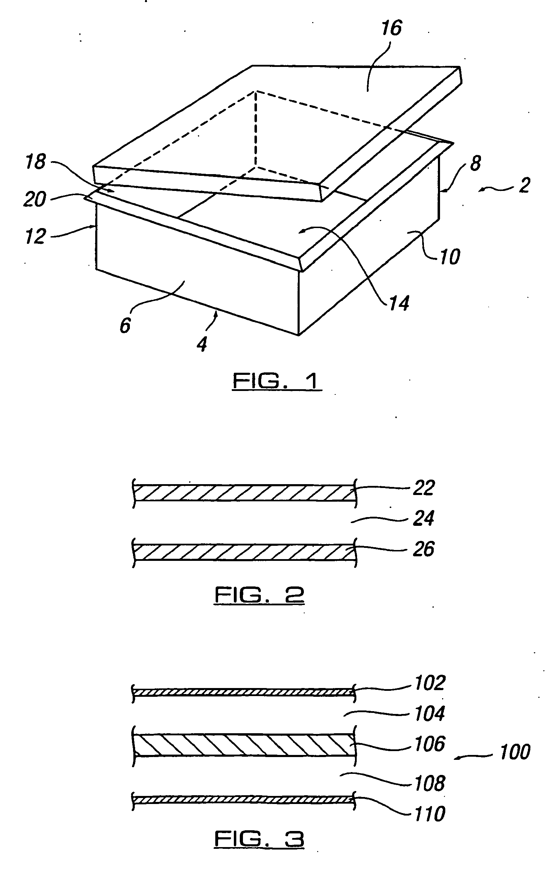

Referring to figures 1-2, there is illustrated a substantially rigid container 2 having a base 4, side walls 6, 8 and end walls 10, 12 which define a cavity 14 therebetween. A closure member in the form of a lid 16 is provided over the opening 18 defined between upper edges 20 of side walls 6, 8 and end walls 10.

In accordance with the present invention, container 2 and lid 16 are substantially soluble in aqueous solution. This solubility is as a result of the polyvinyl alcohol material from which the container is formed.

Referring to figure 2, the container is formed from a laminated, co-extruded or co-moulded polyvinyl alcohol including two or more layers and, more specifically in the example shown, three layers; an outer layer 22, an intermediate layer 24 and an inner layer 26. Since outer layer 22 and inner layer 26 may come into contact with moisture or aqueous solution during normal use at room temperature, these layers are formed from a hot water soluble polyvinyl alcohol, thereby preventing accidental solubilisation of the outer and inner layers 22, 26 during normal use at room temperatures. However, to ensure rapid solubilisation at relatively cold or room temperatures upon removal of the layers 22, 26, intermediate layer 24 is formed from a cold soluble polyvinyl alcohol. The outer and inner layers 22, 26 are relatively thin compared to intermediate layer 24, such that at a hot temperature, the outer and inner layers will rapidly dissolve, thereby exposing intermediate layer 24 to the wash process. The outer and inner layers 22, 26 dissolve at a substantially warmer temperature compared to the intermediate layer 24.

Thus, when a user has finished with container 2, rather than disposing of the container in a waste bin, the user can dispose of the container via solubilisation. The user typically removes the lid 16 from the container so that water can contact both the inner and outer layers 22, 26 thereof and places the container and lid in a dishwasher for example. The dishwasher is set to a normal warm or hot water washing cycle, such as at 70°C. At this temperature, the outer and inner layers 22, 26 quickly and substantially dissolve, thereby leaving the intermediate layer 24. On a cold rinse part of the cycle, the intermediate layer 24 then quickly and substantially dissolves forming a solution that can be simply washed away with the waste water from the dishwashing cleaning process via a conventional drainage system. The diluted solution formed is readily biodegraded by conventional sewage and water treatment processes to the end products carbon dioxide and water, providing a means of disposal of packaging having a minimal environmental impact.

Figure 3 shows an example of a further laminate arrangement 100 containing co-extruded or co-moulded polyvinyl alcohol (PVA) for forming a container. In this arrangement, five layers of material are provided; outermost or external layer 102, first intermediate layer 104, second intermediate layer 106, third intermediate layer 108 and outermost or internal layer 110.

The external layer 102 is typically external to one or more items contained in the packaging in use. The internal layer 110 is typically internal or adjacent one or more items contained in the packaging in use.

Outermost layers 102, 110 are formed from substantially the same PVA which is soluble in hot aqueous solution or aqueous solution at a temperature warmer than the temperature required to substantially solubilise the one or more layers 104-108. First and third intermediate layers 104, 108 are formed from a PVA which acts as a barrier layer, such as for example to water or oxygen.

Second intermediate layer 106 is formed from PVA which is soluble in cold aqueous solution or aqueous solution at a temperature cooler than the temperature required to substantially solubilise outermost layers 102, 110.

Intermediate layers 104-108 can be of greater thickness than outermost layers 102, 110, thereby providing structural rigidity to the container.

## Claims

1. Packaging, said packaging having one or more walls formed from a material comprising two or more layers which have been co-extruded or co-moulded together during manufacture, **characterised in that** all layers of the material include polyvinyl alcohol and the polyvinyl alcohol used in at least two of the material layers differs in type, form, thickness and/or any or any combination of chemical characteristics, mechanical characteristics, structural characteristics, rigidity, impact strength, tensile strength, tear strength or modulus, particle size, chemical grade or solubility.

2. Packaging according to claim 1 **characterised in that** the arrangement of the polyvinyl alcohol layers is selected from the group including AB, ABA, AAB, ABC, ABCD, ABBA, ABCA, AABC, AABB, ABBB, ABCDE, ABCBA, AABAA, ABBBA, ABAAA, ABBAA, ABBBB, ABBBC, where A, B, C, D, E are different grades of polyvinyl alcohol.

3. Packaging according to claim 1 **characterised in that** the packaging comprises at least three layers of polyvinyl alcohol, the two outermost layers or internal and external layers are substantially the same and the one or more intermediate layers located between the two outermost or internal/external layers differs in type, form, thickness and/or one or more characteristics compared to the two outermost or internal/external layers.

4. Packaging according to claim 1 **characterised in that** one or more additional components are included in one or more of the layers with the polyvinyl alcohol.

5. Packaging according to claim 4 **characterised in that** the one or more additional components are one or more biopolymers.

6. Packaging according to claim 5 **characterised in that** the one or more biopolymers include any or any combination of polylactic acid (PLA), co-polyester, starch, polhydroxyalkonoate (PHA), polyhydroxybutyrate (PHB) or blends thereof.

7. Packaging according to claim 1 **characterised in that** one or more outer, outermost or external layers of the packaging are soluble at a warmer temperature compared to one or more inner, innermost, intermediate and/or internal layers of the packaging.

8. Packaging according to claim 7 **characterised in that** the one or more outer, outermost or external layers are thinner than the one or more inner, innermost, intermediate and/or internal layers of the packaging.

9. Packaging according to claim 8 **characterised in that** the one or more outer, outermost or external layers is between 5-250 microns in thickness.

10. Packaging according to claim 9 **characterised in that** one or more inner, innermost or intermediate layers is between 10-2000 microns in thickness.

11. Packaging according to claim 1 **characterised in that** the packaging is in the form of a substantially rigid container.

12. Packaging according to claim 1 **characterised in that** packaging is used to provide secondary or outer packaging for one or more items, composition or objects formed of or containing primary or inner packaging.

13. A method of manufacturing packaging, said method including the step of co-extruding or co-moulding two or more layers of material to form one or more walls of the packaging, **characterised in that** all layers of the material include polyvinyl alcohol and the polyvinyl alcohol used in at least two of the material layers differs in type, form, thickness and/or any or any combination of chemical characteristics, mechanical characteristics, structural characteristics, rigidity, impact strength, tensile strength, tear strength or modulus, particle size, chemical grade or solubility.

14. A method according to claim 13 wherein once formed and used, said method includes the step of disposing of the packaging, said method step including substantially solubilising the packaging in aqueous solution at a pre-determined temperature or temperature range.

## Patentansprüche

1. Verpackung, wobei die genannte Verpackung eine oder mehrere Wände hat, die aus einem Material hergestellt sind, das zwei oder mehr Schichten umfasst, die während der Herstellung zusammen coextrudiert oder im Co-Moulding-Verfahren gespritzt wurden, **dadurch gekennzeichnet, dass** alle Schichten des Materials Polyvinylalkohol aufweisen und dass der in wenigstens zwei der Materialschichten verwendete Polyvinylalkohol in Typ, Form, Dicke und/oder einer beliebigen chemischen Eigenschaft, mechanischen Eigenschaft, strukturellen Eigenschaft, Steifigkeit, Schlagzähigkeit, Zugfestigkeit, Reissfestigkeit oder - modul, Teilchengröße, chemischen Qualität oder Löslichkeit oder in einer beliebigen Kombination dieser verschieden ist.

2. Verpackung nach Anspruch 1, **dadurch gekennzeichnet, dass** die Anordnung der Polyvinylalkoholschichten aus der Gruppe umfassend AB, ABA, AAB, ABC, ABCD, ABBA, ABCA, AABC, AABB, ABBB, ABCDE, ABCBA, AABAA, ABBBA, ABAAA, ABBAA, ABBBB, ABBBC ausgewählt ist, wobei A, B, C, D, E verschiedene Güteklassen von Polyvinylalkohol sind.

3. Verpackung nach Anspruch 1, **dadurch gekennzeichnet, dass** die Verpackung wenigstens drei Polyvinylalkoholschichten aufweist, wobei die zwei äußersten Schichten oder interne und externe Schichten im Wesentlichen die gleichen sind und die eine oder mehreren zwischen den zwei äußersten oder internen/externen Schichten befindliche(n) zwischenliegende(n) Schicht(en) in Typ, Form, Dicke und/oder einer oder mehreren Eigenschaften im Vergleich zu den zwei äußersten oder internen/externen Schichten unterschiedlich verschieden ist/sind.

4. Verpackung nach Anspruch 1, **dadurch gekennzeichnet, dass** in einer oder mehreren der Schichten mit dem Polyvinylalkohol eine oder mehrere zusätzliche Komponente(n) enthalten sind.

5. Verpackung nach Anspruch 4, **dadurch gekennzeichnet, dass** die eine oder mehreren Komponente(n) ein oder mehrere Biopolymer(e) sind.

6. Verpackung nach Anspruch 5, **dadurch gekennzeichnet, dass** das eine oder die mehreren Biopolymer(e) beliebig oder eine beliebige Kombination von Polymilchsäure (PLA), Copolyester, Stärke, Polyhydroxyalkanoat (PHA), Polyhydroxybutyrat (PHB) oder Gemische davon aufweist bzw. aufweisen.

7. Verpackung nach Anspruch 1, **dadurch gekennzeichnet, dass** eine oder mehrere äußere, äußerste oder externe Schicht(en) der Verpackung verglichen mit einer oder mehreren inneren, innersten, zwischenliegenden und/oder internen Schichten der Verpackung bei einer wärmeren Temperatur löslich ist/sind.

8. Verpackung nach Anspruch 7, **dadurch gekennzeichnet, dass** die eine oder mehreren äußere(n), äußerste(n) oder externe(n) Schicht(en) dünner ist/sind als die eine oder mehreren innere(n), innerste(n), zwischenliegende(n) und/oder interne(n) Schicht(en) der Verpackung.

9. Verpackung nach Anspruch 8, **dadurch gekennzeichnet, dass** die eine oder mehreren äußere(n), äußerste(n) oder externe(n) Schicht(en) eine Dicke zwischen 5 und 250 Mikrometern hat/haben.

10. Verpackung nach Anspruch 9, **dadurch gekennzeichnet, dass** die eine oder mehreren innere(n), innerste(n) oder zwischenliegende(n) Schicht(en) eine Dicke zwischen 10 und 2000 Mikrometern hat/haben.

11. Verpackung nach Anspruch 1, **dadurch gekennzeichnet, dass** die Verpackung die Form eines im Wesentlichen steifen Behälters hat.

12. Verpackung nach Anspruch 1, **dadurch gekennzeichnet, dass** die Verpackung zur Bereitstellung einer sekundären oder äußeren Verpackung für eine(n) oder mehrere Artikel, Zusammensetzung oder Gegenstände verwendet wird, die aus einer primären oder inneren Verpackung gebildet sind oder sie enthalten.

13. Verfahren zur Herstellung einer Verpackung, wobei das genannte Verfahren den Schritt des Coextrudierens oder Co-Mouldings von zwei oder mehreren Materialschichten zum Bilden einer oder mehrerer Wände der Verpackung aufweist, **dadurch gekennzeichnet, dass** alle Schichten des Materials Polyvinylalkohol aufweisen und der in wenigstens zwei der Materialschichten verwendete Polyvinylalkohol in Typ, Form, Dicke und/oder einer beliebigen chemischen Eigenschaft, mechanischen Eigenschaft, strukturellen Eigenschaft, Steifigkeit, Schlagzähigkeit, Zugfestigkeit, Reissfestigkeit oder -modul, Teilchengröße, chemische Qualität oder Löslichkeit oder in einer beliebigen Kombination dieser verschieden ist.

14. Verfahren nach Anspruch 13, wobei das genannte Verfahren nach Herstellung und Verwendung den Schritt des Beseitigens der Verpackung aufweist, wobei der genannte Verfahrensschritt im Wesentlichen das Solubilisieren der Verpackung in einer wässrigen Lösung bei einer/einem vorbestimmten Temperatur oder Temperaturbereich aufweist.

## Revendications

1. Conditionnement, ledit conditionnement ayant une ou plusieurs parois formées à partir d'un matériau comprenant deux ou plusieurs couches qui ont été co-extrudées ou co-moulées ensemble pendant la fabrication, **caractérisé en ce que** toutes les couches du matériau incluent de l'alcool polyvinylique, et **en ce que** l'alcool polyvinylique utilisé dans deux au moins des couches de matériau diffère au plan du type, de la forme, de l'épaisseur et/ou au plan de l'une quelconque ou de combinaisons quelconques des caractéristiques chimiques, des caractéristiques mécaniques, des caractéristiques structurales, de la rigidité, de la résistance aux chocs, de la résistance à la traction, de la résistance à l'arrachement ou du module, de la granulométrie, de la nuance chimique ou de la solubilité.

2. Conditionnement selon la revendication 1, **caractérisé en ce que** la disposition des couches d'alcool polyvinylique est sélectionné dans le groupe qui comprend AB, ABA, AAB, ABC, ABCD, ABBA, ABCA, AABC, AABB, ABBB, ABCDE, ABCBA, AABAA, ABBBA, ABAAA, ABBAA, ABBBB, ABBBC, dans lesquelles A, B, C, D, E sont des nuances différentes d'alcool polyvinylique.

3. Conditionnement selon la revendication 1, **caractérisé en ce que** le conditionnement comprend au moins trois couches d'alcool polyvinylique, les deux couches les plus extérieures ou les couches intérieure et extérieure sont sensiblement les mêmes, et la couche ou chaque couche intermédiaire placée entre les deux couches les plus extérieures ou les couches intérieure/extérieure diffère des deux couches les plus extérieures ou couches intérieure/extérieure au plan du type, de la forme, de l'épaisseur et/ou d'une ou de plusieurs caractéristiques.

4. Conditionnement selon la revendication 1, **caractérisé en ce qu'**un ou plusieurs autres composants supplémentaires sont inclus avec l'alcool polyvinylique dans une ou plusieurs couches.

5. Conditionnement selon la revendication 4, **caractérisé en ce que** le ou chaque composant supplémentaire est un ou plusieurs biopolymères.

6. Conditionnement selon la revendication 5, **caractérisé en ce que** le ou chaque biopolymère comprend un quelconque composant ou une quelconque combinaison des composants suivants : acide polylactique (APL), copolyester, amidon, polyhydroxy-alconoate (PHA), polyhydroxy-butyrate (PHB), ou mélanges de ceux-ci.

7. Conditionnement selon la revendication 1, **caractérisé en ce qu'**une ou chacune des couches extérieures, les plus extérieures ou superficielle du conditionnement est soluble à une température plus élevée qu'une ou chacune des couches intérieures, les plus intérieures, intermédiaires et/ ou internes du conditionnement.

8. Conditionnement selon la revendication 7, **caractérisé en ce que** la couche ou chacune des couches extérieures, les plus extérieures ou superficielles est plus mince que la couche ou chacune des couches intérieures, les plus intérieures, intermédiaires et/ou internes.

9. Conditionnement selon la revendication 8, **caractérisé en ce que** la couche ou chacune des couches extérieures, les plus extérieures ou superficielles a une épaisseur comprise entre 5 et 250 microns.

10. Conditionnement selon la revendication 9, **caractérisé en ce que** la couche ou chacune des couches intérieures, les plus intérieures ou intermédiaires a une épaisseur comprise entre 10 et 2 000 microns.

11. Conditionnement selon la revendication 1, **caractérisé en ce que** le conditionnement prend la forme d'un contenant sensiblement rigide.

12. Conditionnement selon la revendication 1, **caractérisé en ce que** le conditionnement est utilisé pour produire un conditionnement secondaire ou extérieur pour un ou plusieurs articles, compositions ou objets formés de conditionnements primaires ou intérieurs, ou qui en contiennent.

13. Procédé de fabrication du conditionnement, ledit procédé comprenant l'étape de co-extrusion ou de co-moulage de deux ou plusieurs couches de matériau pour former une ou plusieurs parois du conditionnement, **caractérisé en ce que** toutes les couches du matériau incluent de l'alcool polyvinylique, et **en ce que** l'alcool polyvinylique utilisé dans deux au moins des couches de matériau diffère au plan du type, de la forme, de l'épaisseur et/ou au plan de l'une quelconque ou de combinaisons quelconques des caractéristiques chimiques, des caractéristiques mécaniques, des caractéristiques structurales, de la rigidité, de la résistance aux chocs, de la résistance à la traction, de la résistance à l'arrachement ou du module, de la granulométrie, de la nuance chimique ou de la solubilité.

14. Procédé selon la revendication 13, selon lequel, après la formation et l'utilisation du conditionnement, ledit procédé comprend l'étape de mise au rebut du conditionnement, ladite étape du procédé comprenant la solubilisation substantielle du conditionnement dans une solution aqueuse à une température ou dans une plage de températures prédéterminée.
